# EUROPEAN PATENT APPLICATION

(11) **EP 4 102 148 A1**
(43) Date of publication of application: **14.12.2022**
(21) Application number: 22177834.3
(22) Date of filing: 08.06.2022
(51) Int. Cl.: F24F 11/52, F24F 11/54, F24F 11/56, H01H 9/18, H02G 3/10, H03K 17/96, H04L 12/28, H04M 1/72415

(54) **PROGRAMMABLE SMART BUTTON WITH DISPLAY**

(30) Priority: 08.06.2021 US 202163208222 P
(71) Applicant: Arlo Technologies, Inc., Carlsbad, CA 92008 (US)
(72) Inventor: McRae, Matthew, Laguna Niguel, CA (US); McManigal, Scott, Newport Beach, CA (US)
(74) Representative: Grünecker Patent- und Rechtsanwälte PartG mbB

(57) **Abstract**

A programmable smart button includes a housing, at least one interactive surface, a controller, and a programmable display adjustable by a user interfacing with a user device such as a smart phone. The display may include a module identifier indicator that identifies a module being controlled by the smart button as well as function indicator associated with an interactive surface of the smart button. The controller is in communication with the display and is configured to set the information in the indicators shown by the display and to determine the function(s) of the interactive surface(s). The display may be a low power display, such as a bistable display, having negligible effect on the battery life of the smart button.

## Description

### CROSS-REFERENCE TO RELATED APPLICATIONS

The present application claims priority to U.S. Provisional Application No. 63/208,222, filed on June 8, 2021, the entire contents of which are incorporated herein by reference.

### BACKGROUND OF THE INVENTION

### 1. Field of the Invention

The present invention relates to a smart button, and more particularly, to a smart button with a programmable display.

### 2. Discussion of the Related Art

Smart buttons are being employed in an ever-increasing range of applications. A "smart button" is a user interface for a device or system that can display information that is discernable by the user and that can be physically pressed or otherwise manipulated by the user to control a device or system. In the "smart home" environment, smart buttons typically are mounted on a wall and used to control a device or system such as a lighting system, a HVAC system, or a home surveillance system. Smart buttons may be wired or wireless, and typically communicate with a base station or hub that also communicates with the controlled device(s) or system(s). The smart button also may communicate directly or indirectly with a user device such as a smart phone, a tablet computer, a desktop computer, or a laptop computer.

Current smart buttons in the marketplace tend to look so similar to one another that they can become confusing to users when there are a number of smart buttons for different applications through a home. Attempts have been made to color code or put physical indicators, such as labels, symbols, or permanent indicia on the surface of the smart button to try and differentiate the smart buttons from each other. However, these indicators can still be confusing to the extent that they provide insufficient guidance or prompts to perform the particular actions required for a proper interface. Further yet, if the programmed action of the smart button is changed, the physical indication on the smart button is changeable only with difficulty, if at all. As such, it can be difficult for members of a household to remember the function of each smart button.

There is a need in the art for a programmable smart button with a programmable display that both identifies its function to the user and can be changed to reflect the task of the smart button.

### SUMMARY OF THE INVENTION

According to one aspect of the invention, this and possibly other needs are met through provision of a programmable smart button that includes a housing, at least one interactive surface, a controller, and a programmable display. The display includes a module identifier indicator that identifies or otherwise is indicative of a service, system, or device being controlled by the smart button (hereafter "controlled module"). The information displayed by the module identifier indicator after programming may be static and/or may vary depending, for example, on the status of the controlled module. The controller is in communication with the display and with a user device having a user interface. The user device is operable to receive instructions from a user to program the display. The controller is configured to receive the instruction from the user device, either directly or by way of a base station. Based on the instructions received, the controller operates the display to show the selected information.

In accordance with another aspect of the invention, the display may also be configurable to indicate the function of one or more interactive surfaces of the smart button. Both the function of the interactive surface and the associated indicator may be selectable by the user as part of the programming operation. The controller is configured to receive the user's selection of the function of the interactive surface and the information that is to be displayed on it, either directly or by way of a base station. Based on the instruction received, the controller operates the display to show the selected information on the selected interactive surface and sends commands to a controlled module.

In accordance with yet another aspect of the invention, the smart button may include a communication element disposed within the housing and configured to communicate with the module being controlled by the smart button, the base station, and/or a user device via a network.

Further, the display of the smart button may be a low power display, such as an eInk^{®} or other bistable display, in order to require negligible power consumption.

These and other objects, advantages and aspects of the invention will become apparent from the following description. The particular objects and advantages described herein can apply to only some embodiments falling within the claims and thus do not define the scope of the invention. In the description, reference is made to the accompanying drawings which form a part hereof, and in which there is shown a preferred embodiment of the invention. Such embodiment does not necessarily represent the full scope of the invention and reference is made, therefore, to the claims herein for interpreting the scope of the invention.

### BRIEF DESCRIPTION OF THE DRAWINGS

Preferred exemplary embodiments of the invention are illustrated in the accompanying drawings in which like reference numerals represent like parts throughout, and in which:
FIG. 1 is a schematic of a home network incorporating a programmable smart button constructed in accordance with an embodiment of the invention;
FIG. 2 is a schematic diagram of the programmable smart button of FIG. 1;
FIGS. 3A-3F are perspective views of the programmable smart button of FIGS. 1 and 2, showing a variety of programmed display options in accordance with the invention;
FIG. 4 is a schematic of a base station usable in the home network of FIG. 1;
FIG. 5 is a flowchart showing the functional interaction between a user device and the programmable smart button of FIGS. 1-3F; and
FIG. 6 is a flowchart showing a process for the customization of an indicator of the programmable smart button of FIGS. 1-3F.

### DETAILED DESCRIPTION

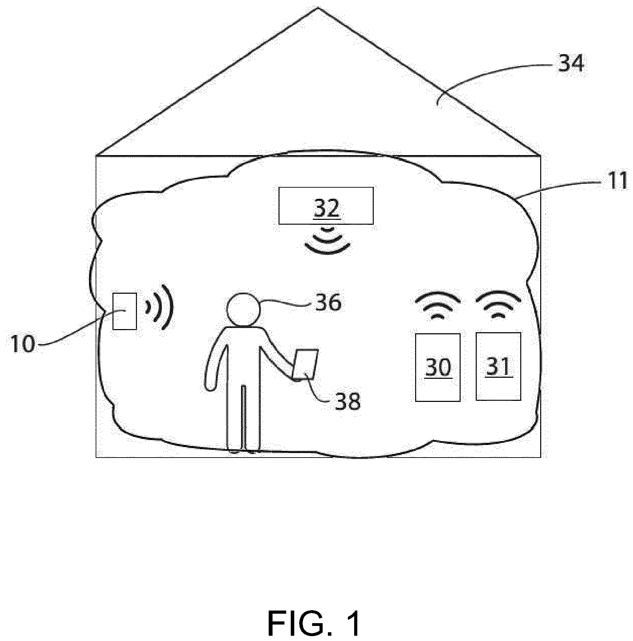

Referring now to FIG. 1, a "smart home" 34 is provided with a network 11 that includes a number of controlled modules 32 that exchange information with a base station 30 and one or more user devices 38 accessible by a human user 36. The base station 30 is connected to a wide area network (WAN) via a gateway router 31. Alternatively, the base station 30 and router 31 could be combined into a single module. Each controlled module 32 is controlled manually using a programmable smart button 10. The smart home 34 may be any residence, business, or defined interior or exterior area having one or more controlled modules 32. Each controlled module 32 may be any of a number of controllable services, devices, or systems; such as a smart light or smart lighting system, a smoke detector, or a monitoring device such as a motion sensor that is standalone or that is integrated into another device, an alarm that also may be stand alone or integrated into another device, and/or an imaging device having one or more cameras. Each user device 38 may be, for example, a smart phone, a computer tablet, a desk top computer, or a laptop computer.

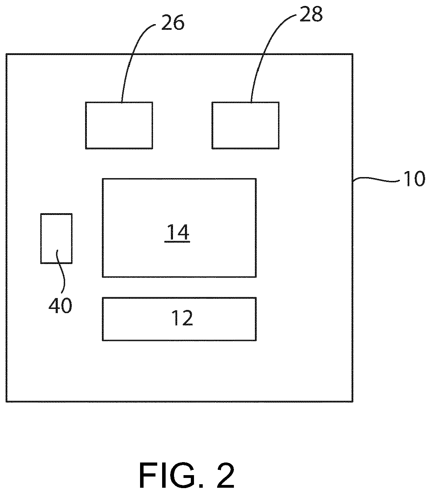

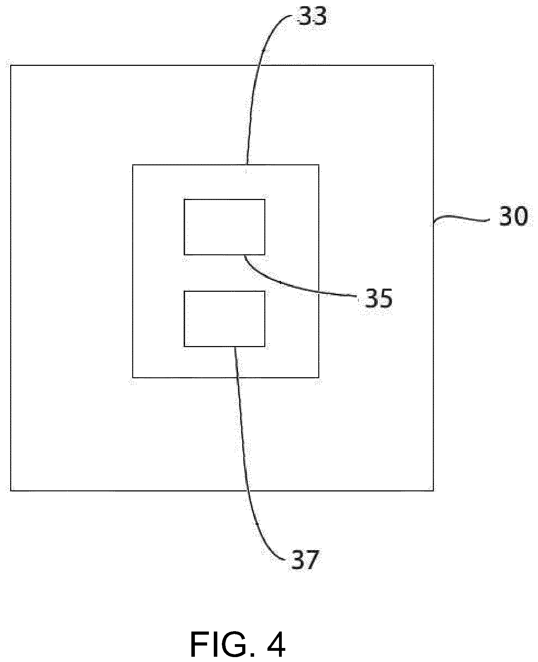

Turning to FIG. 2, the smart button 10 includes a communication element (radio) 26 that allows for wireless connectivity between the smart button 10 and the base station 30. In an alternative embodiment of the invention, it is contemplated that the communication element 26 of the smart button 10 may be configured to communicate instructions and receive information directly with the module 32 being controlled and/or the user device 38 without interaction with the central base station 30. Additional details of the network 11 and the interaction of its components are described below in conjunction with FIG. 4.

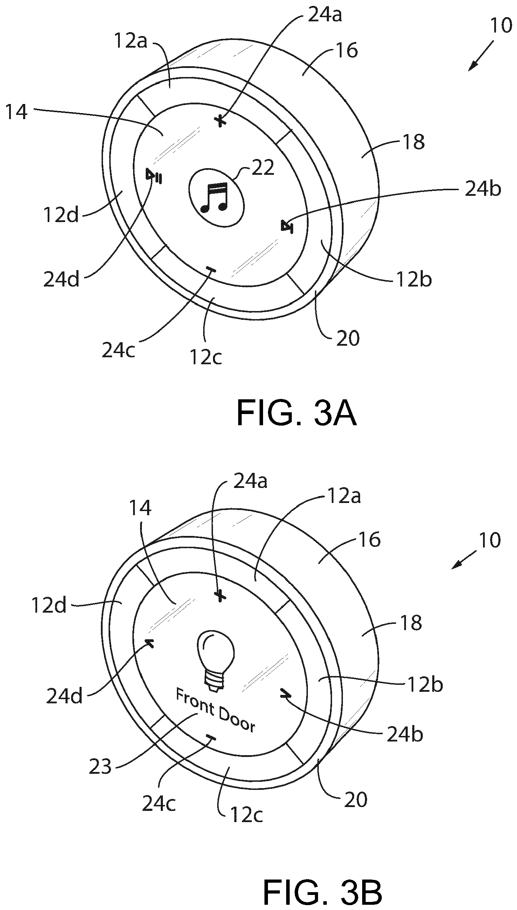

Still referring to FIG. 1, the smart button 10 can be programmed, using a user device 38 or other computer connected to the network 11, to interface with and control a specific module 32, with the displays on the smart button 10 being customized for control of that module. These displays may include at least one "module identifier indicator" that identifies the module being controlled by the smart button 10 and that might also display additional information about the status of the module. The displays also include at least one "function indicator" that associates a specific control operation with an associated interactive surface on the smart button 10. The function indicator(s) may be fixed for a given programmed application or may vary depending on the status of the controlled module or the smart button. Various examples of how the smart button 10 may be configured for various controlled modules now will be described in conjunction with FIGS. 3A-3F.

Referring generally to all of FIGS. 3A-3F, the smart button 10 includes a housing 16 presenting at least one interactive surface 12 and a display 14 that displays information. The display 14 typically is provided on the front surface 20 of the housing. The display 14 may be a low energy display, such as, but not limited to, a bistable display. Examples of a bistable display include an E INK^{®} display. A bistable display allows for an image to be retained on the display 14 even without power. As a result, the display 14 only consumes power when something on the display 14 changes. E INK^{®} and other bistable displays are visible without backlighting or other illumination in ordinary daytime ambient light environments. E INK^{®} and other bistable displays also are programmable to the extent that the design, pattern, and even color of the film forming the display can be dynamically changed. It is contemplated that the display 14 can be black and white, tri-color, quad-color, or full color. As such, operation of the display 14 does not require frequent charging of the smart button 10. Selectively actuatable backlighting may be provided to facilitate operation in low-light conditions.

In the representative embodiment of the invention, the housing 16 has a sidewall 18, the front surface 20, and a rear surface (not shown). While the housing 16 is depicted as being circular in shape, it is contemplated that alternative embodiments may use a housing 16 having any of a variety of shapes; such as, but not limited to, rectangular, oval, pentagonal, hexagonal, etc.

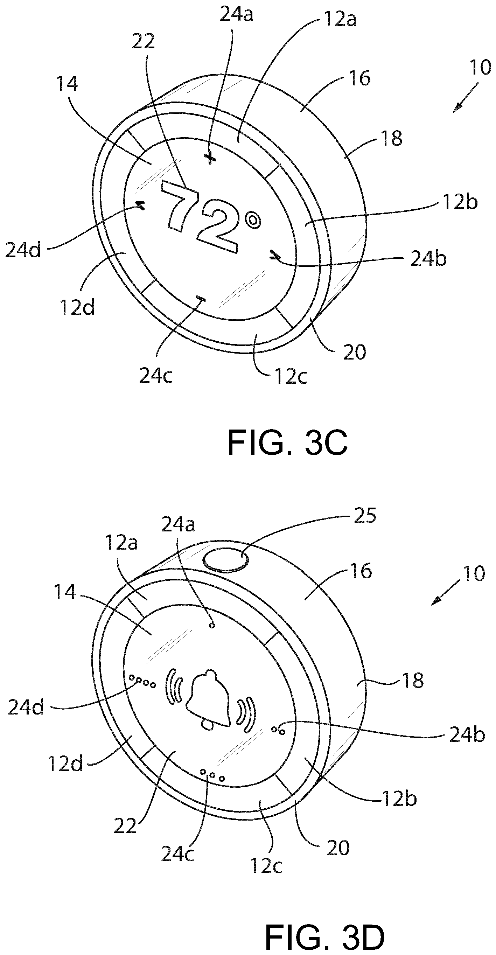

Still referring generally to FIGS. 3A-3F, interactive surface(s) 12 may be located at any location on the smart button 10 that is accessible by a user. In the illustrated embodiment, at least one interactive surface 12 is provided on the front surface 20 and protrudes forwardly from the display 14. An annular surface is illustrated that can be actuated by depressing or swiping the surface. However, that surface could be segmented and/or replaced in whole or in part by buttons, dials, motion or other presence sensors, or any other user-manipulatable device(s). Other interactive surfaces could be provided elsewhere on the smart button 12. One such "secondary surface" 25 is described below in conjunction with FIG. 3D.

As mentioned above, the display 14 can be selected and programmed so that at least a portion of the display serves as a "module identifier indicator" 22 that graphically, pictorially, or texturally indicates information concerning the nature of a module 32 that is controlled by the smart button 10. This information displayed by the indicator 22 may be static for a specific programmed smart button and/or may vary depending, for example, on the status of the controlled module 32. Instead of or in addition to serving as a module indicator, all or a portion of the display 14 could serve as a function indicator 24 associated with an interactive surface 12 that is manipulated to adjust or control the module 32. Various examples of modules and indicators are provided below.

While the representative embodiments of the inventions depict the module identifier indicator 22 as being centrally located within the display 14 and several function indicators 24a-24d surrounding the module indicator, it is contemplated that other embodiments of the invention may locate the indicators 22 and 24 at any location on the display 14 (e.g., centered, off-centered, or otherwise).

Referring to FIG. 3A, the smart button 10 is shown as being programmed to control a module 32 in the form of a speaker system. The display 14 of the programmed button 10 contains a module identifier indicator 22 in the form of a musical note. The module identifier could contain additional information, such as information concerning the source of the content being played on the speakers. For example, if the speaker system is connected to a streaming service such as SPOTIFY^{®}, the musical note could be accompanied by or even replaced by the SPOTIFY^{®} logo. In the representative embodiment of FIG. 1, smart button 10 is configured such that the interactive surface 12 of the button 10 effectively includes four circumferentially-spaced interactive surface portions 12a-12d. The display 14 includes four function indicators 24a-24d near the edge of the display 14. Each function indicator 24a-24d is adjacent to one of the interactive surface portions 12a-12d and indicates the function of that interactive surface portion. For instance, a top function indicator 24a indicates that interactive surface portion 12a may be used to increase the volume of a connected speaker system, a right function indicator 24b indicates that the interactive surface portion 12b may be used to skip to the next song or other content being played, a lower function indicator 24c indicates the interactive surface portion 12c may be used to lower the volume of the connected speaker system, and the left function indicator 24d indicates that the interactive surface portion 12d may be used to play and pause the content being played by the connected speaker system.

FIG. 3B depicts the smart button 10 after it is programmed to control a module 32 in the form of a smart lighting system. The smart button 10 has a module identifier indicator 22 in the form of a light bulb indicator. Similar to FIG. 3A, FIG. 3B depicts a smart button 10 programed to have four interactive surface portions 12a-12d and a display 14 with four function indicators 24a-24d, each function indicator being located adjacent to a respective interactive surface portion. In this instance, the top function indicator 24a indicates that the interactive surface portion 12a may be used to turn on or increase the brightness or intensity of the light(s) being controlled by the button 10, while the lower function indicator 24c indicates that the interactive surface portion 12c may be used to turn off or lower the brightness or intensity of the light(s) being controlled by the button 10. The right and left function indicators 24b, 24d indicate that their respective interactive surface portions 12b, 12d may select which light is being controlled by the smart button 10.

In the case of a multi-light system, the module indicator 22 of FIG. 3B may include an additional designation 23 identifying which light is being controlled by the smart button 10 at that time. Specifically, the designation 23 of FIG. 3B indicates that the smart button 10 is controlling the light at the front door. As indicated above, the interactive surface portions 12b, 12d may be used to cycle through the connected lights so that the button 10 may control other lights throughout the building other than the light at the front door. In this case, the designation 23 will change as the user scrolls through the controlled lights.

Referring now to FIG. 3C, the smart button 10 is shown as being programmed to act as a thermostat with the controlled module 32 being an HVAC system. In this case, the module indicator 22 of the smart button 10 is a temperature. The smart button 10 includes four interactive surface portions 12a-12d and four function indicators 24a-24d on the display 14, each indicator being adjacent to a respective one of the interactive surface portions. In this instance, the top indicator 24a indicates that the interactive surface portion 12a may be used to increase the target temperature of the connected HVAC system. Conversely, the lower indicator 24c indicates that the interactive surface portion 12c may be used to lower the target temperature of the connected HVAC system. The right and left indicators 24b, 24d indicate that their respective interactive surfaces 12b, 12d may be used to adjust which temperature sensor of the connected HVAC system is being shown on the display 114. As in the previous configuration, the module identifier indicator 22 may include one or more additional, variable designations (not shown) that identify the prevailing status of one or more aspects of the HVAC system, such as its set point or whether it is in a heating or cooling mode.

Next, FIG. 3D depicts an alternative module identifier indicator 22 of the smart button 10 in the form of an alarm icon indicating that the smart button 10 functions as a panic button of a controlled module in the form of an alarm or alarm system. In this exemplary programmed configuration, the function indicators 24a-24d correspond with the respective interactive surface portions 12a-12d for control of the panic button and associated audio and/or visual alarm(s) forming the controlled module(s). Another alternative, also shown in FIG. 3D, is the addition of a secondary interactive surface 25 in the form of an interactive surface on the sidewall 18 of the housing 16.

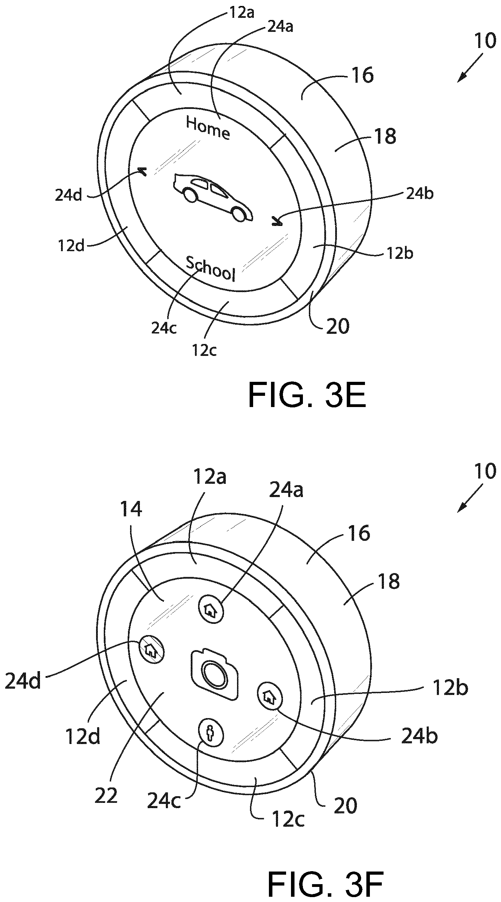

In FIG. 3E, the display 14 of the smart button 10 is shown as being programmed to contain a module identifier indicator 22 in the form of a logo of a third-party service provider, such as a driver service such as UBER^{®}. In this configuration of the smart button 10, the display 14 includes four function indicators 24a-24d near the edge of the display 14. Each indicator 24a-24d is adjacent to one of four interactive surface portions 12a-12d. For instance, the top and bottom indicators 24a, 24c indicate that respective interactive surfaces 12a, 12c may be used to activate the driver service on a connected user device 38 (FIG. 1) for designated tasks. In the case of a driver service, the task may be transportation to a desired destination. Meanwhile, the interactive surface portions 12b and 12c and the associated right and left indicators 24b, 24d may be used to toggle between various competing or complimentary service providers, such as UBER^{®} and LYFT^{®} in the case of driver services. Upon toggling between providers, the logo forming the module identifier indicator 22 on the display 14 may change to notify a user 36 which service provider is currently being selected. Alternatively, a portion of the indicator may be static such as illustrating a vehicle, and a portion may depict a designation, such as UBER^{®} and LYFT^{®}, that varies as the user scrolls between available services.

Next, module identifier 22 of FIG. 3F depicts the display 14 of the smart button 10 as controlling a module 32 in the form of a home security system or a controlled camera of such a system. The display 14 may indicate, amongst other things, the connectivity of the smart button 10 to the module 32. The module identifier indicator 22 may be stylized in the form of an icon, such as a camera or a company logo of the home security system, such as ARLO^{®}. In this configuration, the function indicators 24a-24d correspond with respective interactive surface portions 12a-12d for control of the associated home security application and display of various statuses and/or images monitored by the home security application.

Now referring to FIG. 4, a schematic diagram of the smart button 10 including the previously discussed interactive surface 12 and display 14 is shown. The smart button 10 further includes a number of internal components that allow for communication of the smart button 10 with the associated module 32. The smart button 10 includes a communication element 26 that allows for wireless connectivity between the smart button 10 and the network 11 via the base station 30. In an alternative embodiment of the invention, it is contemplated that the communication element 26 of the smart button 10 may be configured to communicate instructions and receive information directly with the module 32 being controlled and/or a user device 38 without interacting with the base station 30.

Still referring to FIG. 4, the smart button 10 may further include a microprocessor or controller 28 and a power source 40. While FIG. 4 illustrates the communication element 26 and the smart button controller 28 as being separate components within the smart button 10, it is also contemplated that the communication element 26 and the smart button controller 28 may be combined into a single element.

The communication element 26 may employ any combination of one or more of a sub-GHz, Bluetooth, low power WIFI, other low power home networks such as Bluetooth Low Energy (BLE), Zigbee, Zwave, or other low power radio technology. As discussed above, the smart button 10 may be connected to one or more controlled modules 32 such as, but not limited to, lights, a thermostat, and/or a home security system. These modules 32 may be connected to the smart button 10, to each other, and to the user device(s) 38 through the base station 30 or directly via the network 11. As will be described in further detail below, the smart button controller 28 is configured to process the inputs received from the interactive surface(s) 12 of the smart button 10 by a user 36 (FIG. 1). The smart button controller 28 may also be configured to control the nature of the module identifier indicator 22 and the function indicator(s) 24 shown on the display 14.

Referring again to FIG. 1, the base station 30 may work as a central hub for communication of instructions and information between the smart button(s) 10, user device(s) 36, and module(s) 32 within the smart home 34 of FIG.1. The base station 30 may be capable of communicating instructions to the module 32 being controlled based on the interaction of the user 36 with the function indicator(s) 24 on the interactive surface(s) 12 of the smart button 10, while also communicating information about the status of the module(s) 32 to the smart button 10 via the function indicator(s) 24. Referring again to FIG. 4, the base station 30 can include base station electronic circuitry 33 including a first wireless I/O communication device or radio 35 for communicating with the module 32 over the network 11. It is further contemplated that the network 11 may be established by the base station 30 or implemented in a WLAN (wireless local area network) as an 802.11 network. The circuitry in the base station 30 may additionally include a second wired or wireless I/O communication device or radio for accessing a WAN, such as the Internet, through a Local Area Network (LAN) connected to a Gateway and/or router 31 (if present and not combined with the base station 30). The base station 30 also contains a processor, and/or a non-transient memory storage, among other things. It should be apparent that "circuitry" in this regard can comprise hardware, firmware, software, or any combination thereof. The base station 30 may also be in communication with an external server (not shown), which may be a cloud-server accessible via the WAN. The external server can include or be coupled to a microprocessor, a microcontroller or other programmable logic element (individually and collectively considered "a master controller") configured to execute a program. The master controller 37 may be contained in whole in the base station 30. Alternatively, interconnected aspects of the master controller 37 and the programs executed by it could be distributed in various permutations within the smart button 10, the controlled module 32, the base station 30, the user device 38, and the external server.

In operation, the controller 28 in the smart button 10 also may be able to communicate with the base station 30 via the communication element 26. The smart button controller 28 processes the interactions of the user 36 with the interactive surface 12 of the smart button 10, and then sends an associated instruction to the home base station 30 via the communication element 26 of the smart button 10. In turn, the base station 30 passes on the instruction to the module 32 being controlled by the smart button 10 via the base station communication device 35. The smart button controller 28 also may be able to receive information from the base station 30 via the communication element 26 regarding the module 32 being controlled by the smart button 10. As a result, the display 14 of the smart button 10 can show a current status of the module 32 being controlled by the smart button 10. In an alternative embodiment of the invention, it is contemplated that the communication element 26 of the smart button 10 may be configured to communicate instructions to and receive information directly from the module 32 being controlled without interaction with the base station 30. In still another alternative configuration, processing and other computing functions performed by the smart button controller 28 could be contained wholly in the master controller.

As briefly discussed above, the module identifier indicator 22 and function indicator(s) 24 on the display 14 of the smart button 10 may be changed by a user 36 via the user device 38. As mentioned above, the user device 38 may be in the form of a computer, a phone, a tablet, or other smart device that is able to connect to the base station 30, typically via the network 11. The user 36 may use a touch screen or other interface of the user device 38 to access a program, such as, but not limited to, a mobile application, a web browser, or the like. Through the user interface, the user 36 can select the module identifier indicator 22 and/or the function indicator(s) 24 on the display 14 of the smart button 10. More specifically, the user interface can communicate with the controller 28 of the smart button 10 via its communication element 26 to adjust or select the indicator 22 on the display 14 of the smart button 10 and/or the function of the interactive surface 12.

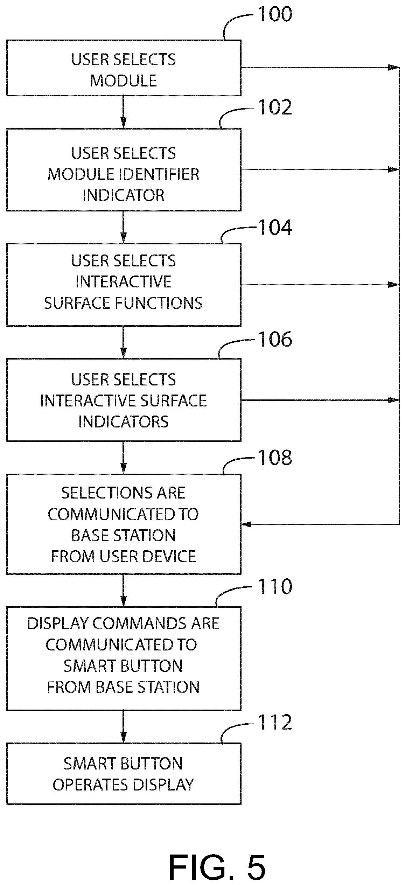

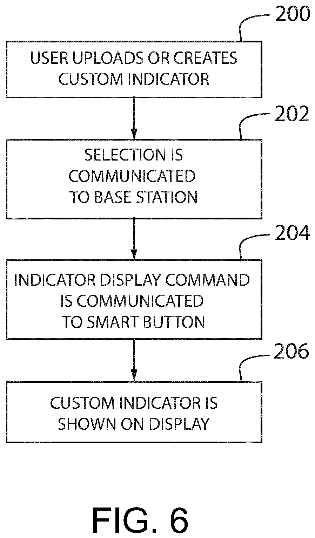

More specifically, the user 36 may interact with the interface of the user device 38 to access a menu and choose one of a pre-designated number of modules 32 to be controlled by the smart button 10. In turn, the user 36 may interact with the interface of the user device 38 to select the module identifier indicator 22 to be shown on the display 14 of the smart button 10 to indicate to the user 36 which module 32 is being controlled by the smart button 10. In the case of a home security system, the module(s) 32 could include one or more cameras, and the indicator 22 could be a schematic camera icon as shown in FIG. 3F. It is also contemplated that the user 36 may interact with the interface to upload or create a customized module identifier indicator 22 to include on the display 14 of the smart button 10. For example, in the instance of the smart button 10 controlling a module 32 in the form of a smart light switch, the user 36 may determine that they do not want to use one of the preselected indicators (e.g., a lightbulb) and use their own custom indicator 22. This custom indicator 22 may then be uploaded to the smart button 10 via the interface of the user device 38. As such, a number of smart buttons 10 can be installed around the home 34 for control of different home systems 34 without confusion. Meaning the user 36 need only look at the display 14 and indicator 22 to know which smart button 10 controls which module 32. All of the above is described in further detail below with respect to FIGS. 5 and 6.

In addition, the user 36 may interact with the interface of the user device 38 to establish the function of each interactive element 12 and its associated function indicator 24. Similarly, the user 36 may interact with the interface of the user device 38 to select each function indicator 24 on the display 14. As a result, a user 36 can order and configure the interactive elements 12 of the smart button 10 to their liking. The user 36 is therefore able to completely customize the display 14 and function of the interactive surfaces 12 of the smart button 10. In addition, the user 36 may re-customize the display 14 and interactive surfaces 12 at any time by interacting with the interface of the user device 38. As such, the smart button 10 can be updated at any time without confusion to the user 36 or having to change the physical properties of the smart button 10 itself (i.e., a sticker, color-coding, etc.).

FIG. 5 is a flowchart depicting a possible interaction between the user 36 with the interface of the user device 38 and the smart button 10. At block 100, the user 36 interacts with the interface of the user device 38 to select which module 32 will be controlled by the smart button 10. The user device 38 may be in communication with the base station 30, the smart button 10, and/or an external server to access and display a menu or listing of the modules 32 connectable to the smart button 10. This selection by the user 36 may either be communicated to the base station 30 immediately or after completion of further selections described below. This is also applicable to the selections at blocks 102-106 further described below.

At block 102 the user 36 continues to interact with the interface of the user device 38 to select which module identifier indicator 22 the user 36 would like shown on the display 14 of the smart button. The interface of the user device 38 may provide a number of indicators 22 for the user 36 to choose from, including a default indicator 22 associated with the previously selected module 32 to be controlled. For example, in the case of a home security system, the default indicator may be a camera, but the user could select from a list of available security system manufacturers (e.g., ARLO^{®}). Alternatively, the user 36 could upload a custom indicator 22 to the interface of the user device 38.

FIG. 6 depicts a flowchart of a process for uploading a custom module identifier indicator 22 for display on the smart button 10. In block 200, the user 36 uploads a custom indicator 22 stored on the user device 38, the base station 30, or an external server. Alternatively, the user could create a custom indicator of his or her own design by typing a textural indicator or downloading an icon or manufacturer logo. Next, at block 202 the user device 38 transmits the custom indicator 22 to the base station 30, where it may be stored on a non-transitory memory storage, a server within the base station, or in an external server in communication with the base station. At block 204, the custom indicator 22 is transmitted to the smart button 10 via the communication element 26. The smart button controller 28 may either rely on the memory storage of the base station 30 or an external server, or the smart button controller 28 may be able to store the received custom indicator 22 on its own memory storage. At block 206, the smart button controller 28 operates the display 14 to show the custom module identifier indicator 22 selected by the user 36.

Referring again to FIG. 5, at block 104, the user 36 interacts with the interface of the user device 38 to select the functions of each interactive surface 12 of the smart button 10. This step may be optional if default interactive surface functionality is installed automatically upon module selection, or an overridable default function may be provided. Then, the user may accept this default, select from a number of available presets, or create a customized setting. Still alternatively, if no default preset is provided, the user could select from a number of available presets or create a customized setting using a procedure akin to that discussed above in connection with FIG. 6. As stated above regarding block 100, the selection by the user 36 may either be communicated to the base station 30 immediately or after completion of further selections described below.

At block 106, the user 36 may interact with the interface of the user device 38 to select the function indicator 24 associated with each interactive surface 12 to be included in the display 14 of the smart button 10. As with the interactive surface function, this operation is optional if a default indicator 24 is downloaded upon user-selection of the module and the user could override a default indicator 24 with a selected or customized indicator 24. Alternatively, the user could simply select or create an indicator 24 if no default is provided. As stated above regarding block 100, the selection by the user 36 may either be communicated to the base station 30 alone or in conjunction with the other selections described above.

At block 108, the selections of blocks 100-106 are communicated from the user device 38 to the base station 30. This communication may occur directly between the user device 38 and the base station 30 via the above discussed communication devices of the base station 30 or by way of an external server, such as a cloud-server.

At block 110, the selections of blocks 100-106 are communicated from the base station 30 to the smart button 10. More specifically, the communication device 26 of the smart button 10 receives the selections of blocks 100-106 from the base station 30 and its communication device. The selections, which may be further processed in the master controller to be compatible with the smart button's controller 28, are then communicated to the controller 28 of the smart button 10. The selections of blocks 100-106 can be communicated directly from the user device 38 and its user interface to the smart button 10 and its controller 28.

At block 112, based on the results of blocks 100-106, the smart button controller 28 displays the image of the module identifier indicator 22, the function of the interactive surfaces 12, and the image of the function indicators 24 on the smart button 10. The data regarding the indicators 22, 24 and the function of the interactive surfaces 12 may be stored within the smart button controller 28 in a memory storage, within a memory storage of the base station 30, or within a memory storage of the server. As a result of blocks 100-112 described above, the interactions of the user 36 with the interface of the user device 38 results in the smart button controller 28 communicating instructions to the display 14 regarding the indicators 22 and 24 and the functions of the interactive surfaces 12.

As discussed above, the display 14 of the smart button 10 may be a low power display, such as a bistable display. One such display is commercially available under the mark E INK^{®}. By using a low power display 14 that requires no back lighting in normal ambient light, the effect on the life of the power source 40 within the smart button 10 is negligible and requires little to no additional charging of the smart button 10. This contrasts with an LCD or OLED display. The only non-negligible use of power occurs when the smart button controller 28 receives instructions to change the display 14, as discussed above.

The smart button 10 also may be able to have increased functionality by future software updates. For example, the smart button controller 28 may receive updates to increase the functionality of the smart button 10 and the number of module(s) 32 that may be connected to the smart button 10.

Although the best mode contemplated by the inventors of carrying out the present invention is disclosed above, practice of the above invention is not limited thereto. It will be manifest that various additions, modifications and rearrangements of the features of the present invention may be made without deviating from the spirit and the scope of the underlying inventive concept.

It should be appreciated that such a development effort might be complex and time consuming, but would nevertheless be a routine undertaking of design, fabrication, and manufacture for those of ordinary skill having the benefit of this disclosure. Nothing in this application is considered critical or essential to the present invention unless explicitly indicated as being "critical" or "essential."

## Claims

1. A programmable smart button comprising:
a housing;
at least one interactive surface;
a variable display adjustable by a user, the display having a module identifier indicator indicative of one or more aspects of a module being controlled by the smart button; and
a controller in communication with the display, the controller being responsive to input from a user to set a visual characteristic of the indicator and to set the function of each of the at least one interactive surface.

2. The smart button of claim 1, wherein the controller is further in communication with a user device, the user device being operable to receive instructions from a user regarding information to be displayed on the module identifier indicator.

3. The smart button of claim 2, wherein the display further comprises at least one function indicator associated with the at least one interactive surface, and wherein the user device is operable to receive instructions from the user regarding a function of each interactive surface.

4. The smart button of claim 3, wherein each of the at least one function indicator is disposed at least generally on a common surface with the interactive surface.

5. The smart button of any of the preceding claims, wherein the display is a bistable display.

6. The smart button of any of the preceding claims, further comprising a communication element disposed within the housing and configured to communicate with the module being controlled by the smart button via a network.

7. A method of adjusting a display of a smart button, the method comprising:
providing the smart button having the display and an interactive surface;
connecting the smart button to a controlled module and to a user device;
interacting with the user device to select a module identifier indicator to be shown on the display of the smart button, the module identifier indicator being indicative of an aspect of the controlled module.

8. The method of claim 7, further comprising interacting with the user device to select a function of the interactive surface of the smart button.

9. The method of claim 8, further comprising interacting with the user device to select at least one function indicator shown on the display that is associated with the interactive surface of the smart button.

10. The method of any of claims 7-9, wherein interacting with the user device to select the module identifier indicator comprises interacting with the user device to select the module identifier indicator from a menu of available indicators or to create a customized identifier indicator.

11. The method of any of claims 7-9, wherein connecting the smart button to the controlled module comprises connecting the smart button and the controlled module to a base station.

12. The method of claim 11, wherein connecting the smart button to the controlled module comprises interacting with the user device to select the controlled module from a number of modules connected to the base station.

13. A smart home comprising:
a wireless network;
at least one controllable module in communication with the wireless network; and
a programmable smart button in communication with the wireless network and configured to control the module, the smart button including a display, at least one interactive surface, a controller, and a communication element configured to communicate with the network;
wherein the controller is in communication with the display, the network, and a user device, the controller being configured, in response to receiving instructions from the user device, to operate the display to show a module identifier indicator selected by a user via the user device to indicate a characteristic of a specific module being controlled by the smart button.

14. The smart home of claim 13, wherein the display further includes at least one function indicator associated with at least one respective interactive surface; and
wherein the controller is configured to operate the display to show at least one function indicator selected by the user via the user device to indicate a function of at least one respective interactive surface.

15. The smart home of claim 13, wherein the display is a bistable display.
